# EUROPEAN PATENT SPECIFICATION

(11) **EP 4 211 832 B1**
(45) Date of publication and mention of the grant of the patent: **11.12.2024**
(21) Application number: 20788736.5
(22) Date of filing: 05.10.2020
(51) Int. Cl.: H04L 41/5009, H04L 43/08

(54) **DETECTING A NETWORK-INDUCED CONTRIBUTION TO A QUALITY OF EXPERIENCE DEGRADATION**
ERKENNUNG EINES NETZWERKINDUZIERTEN BEITRAGS ZU EINER ERFAHRUNGSQUALITÄTSVERSCHLECHTERUNG
DÉTECTION D'UNE CONTRIBUTION INDUITE PAR RÉSEAU À UNE DÉGRADATION DE LA QUALITÉ D'EXPÉRIENCE

(43) Date of publication of application: 19.07.2023
(73) Proprietor: Huawei Technologies Co., Ltd., Shenzhen, Guangdong 518129 (CN)
(72) Inventor: ROSSI, Dario, 80992 Munich (DE); HUET, Alexis, 80992 Munich (DE)
(74) Representative: Körber, Martin Hans
(86) International application number: PCT/EP2020/077766
(87) International publication number: WO 2022/073576

(56) References cited:
- EP-A1- 3 672 154
- US-A1- 2013 159 498
- US-A1- 2015 326 447
- US-A1- 2020 213 211
- HORA DIEGO NEVES DA ET AL: "Narrowing the Gap Between QoS Metrics and Web QoE Using Above-the-fold Metrics", 2 March 2018, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 31 - 43, ISBN: 978-3-642-17318-9, XP047480506

## Description

### TECHNICAL FIELD

The present disclosure relates generally to the monitoring of network traffic, in particular, of web traffic between a user and a web application. The disclosure relates specifically to the detection and evaluation of a network-induced quality of experience (QoE) degradation of the user. Thus, the disclosure provides a device and method for detecting a network-induced contribution to a determined QoE degradation of the user. To this end, the device may be configured to identify and disentangle the network-induced contribution to the determined QoE degradation from a content-induced contribution caused by a content change of the web application.

### BACKGROUND

Inference of QoE of one or more users, and the detection of its degradation, is an important management tool for internet service providers (ISPs). Many objective in-browser metrics exist, and their monitoring from encrypted web traffic between the users and web applications is feasible. Thereby, the web traffic corresponds to the amount of data sent or received by the users to/from the web applications.

However, QoE degradations may be rooted at different sources. For instance, QoE degradations may be rooted in network-induced problems, i.e., problems related to the network that impacts the web traffic and thus causes the QoE degradations. Alternatively, the QoE degradations could be simply caused by a change of the content itself.

Some relevant studies in this field relate to the definition of QoE and its inference. In particular, some conventional techniques define web QoE metrics, which correlate with the QoE performance, so as to infer the web QoE metrics without having to access browser metrics. The QoE inference may be done from encrypted network traffic, which is what ISPs typically have access to.

Some other studies relate to web QoE monitoring. For instance, browser studies typically correlate a QoE change with changes in the software base.

Some other studies relate to web QoE monitoring. For instance, browser studies typically correlate a QoE change with changes in the software base.

Some other studies relate more specifically to QoE degradation, in particular, the detection of QoE degradations of users. The focus on QoE degradations from the perspective of the ISPs was proposed first for tackling general applications, then video applications, and more recently also web applications.

Some other studies relate to web content monitoring. Given that the web evolved much in the last thirty years, there is industrial effort to monitor its evolution, in particular, from the viewpoint of web page characteristics, or technologies, or content. Academia also regularly performs longitudinal surveys of content changes employing large datasets, but QoE is generally out of the picture in these studies.

US 2015/326447 A1 discloses a QoE optimization system analyzes diagnostic files to determine device Key Performance Indicators and a device QoE, and to determine a root cause of a network problem (such as dropped calls) leading to a diminished QoE. US 2013/159498 A1 discloses that the single QoE metric may be determined based on a set of empirical characteristics relating to the streaming video service such as startup latency, video quality, and the likelihood of interruptions in streaming playback.

### SUMMARY

The present disclosure bases on the fact that the conventional studies focus either on QoE or on content, but rarely are both aspects considered together. Furthermore, even when these aspects are considered together, only marginals are considered, but temporal aspects are not taken into account. That is, no information from content evolution is taken into account when evaluating QoE.

QoE degradations are conventionally identified, for instance, by linking network key performance indicator (KPI) features with application-specific metrics representative of user QoE (also called user KQI). However, this neglects the impact of content changes that regularly happen in web applications. For instance, when a web page of a web application changes, the KQI indicator can change as well (e.g., when the structure of the web page becomes more complex with more objects, it may take longer to download the web page, but this may not be related to any network limitation or to a reduced web traffic). The conventional methodology, which ignores content particularly content changes, is thus not reliable in the case of web applications, and would lead to many false alarms.

In view of the above-mentioned problems and disadvantages, embodiments of the present invention aim to improve the detection of QoE degradations. In particular, an objective is to enable a joint monitoring of QoE and web application content, in order to determine the network-induced contribution to a QoE degradation of a user, or of a set of users, of the web application.

The objective is achieved by the embodiments of the invention as described in the enclosed independent claims. Advantageous implementations of the embodiments of the invention are further defined in the dependent claims.

Embodiments of the invention provide a device and a method for detecting QoE degradations of users of web applications, wherein, instead of looking at the network level only, also content related information is considered. A device or method according to an embodiment of the invention may, to this end, employ active measurements for accessing the content related information. The embodiments of the invention base on solving two problems. Firstly, the problem of identifying and disentangling QoE degradations caused by network issues (for which ISPs are responsible) from apparent QoE degradations caused by content-based changes (for which ISPs are not responsible). Secondly, the problem of combining different network and content signals, in order to provide clues about the most probable origin of the determined QoE degradations.

A first aspect of the disclosure provides a device for detecting a network-induced contribution to a QoE degradation for one or more web applications, as defined by the appended independent claim 1.

The device of the first aspect is able to consider the content particularly content changes of the web applications, when detecting a QoE degradation of a user. For instance, the device may passively monitor the one or more user metrics (which may comprise one or more quality of service (QoS) metrics), and may further separately perform active measurements to track changes of the content for one or more selected web applications, i.e., to determine the content metrics.

The device may detect the QoE degradation following the user metrics. The one or more user metrics may be closely related to the QoE of the one or more users. The user metrics may be relevant to the one or more users (instead of purely network related metrics), and may be accessible (passively) even under encryption of the web traffic.

The device can further determine the network-induced QoE contribution to the QoE degradation. For instance, the device may distinguish, whether the determined QoE degradation is caused by a network-based issue or change and/or is caused by a content-based change. This can improve the detection and analysis of the determined QoE degradation. In particular, this may enable a reduction of false alarms. It may further be possible for the device to explain the determined QoE degradation, e.g., to determine the contribution to the QoE degradation of either content, network, or another source. This may allow for a better understanding of issues encountered by the users.

In an implementation form of the first aspect, the contribution information is indicative of one of: the network-induced contribution is the largest contribution to the determined QoE degradation; the network-induced contribution is not the largest contribution to the determined QoE degradation; the network-induced contribution is the only contribution to the determined QoE degradation; the network-induced contribution to the determined QoE degradation is zero.

The network-induced contribution is the contribution that the network (particularly, a network issue) has on the determined QoE degradation. The determined QoE degradation reflects the change of the QoE (and corresponding change of the user metrics) in a certain direction considered to indicate a worse QoE. That is, the network-induced contribution is the contribution, which may be in the responsibility of the ISP.

According to this implementation form, the network-induced contribution may be 100% (i.e., the determined QoE degradation is only caused by network issue(s)), or may be 0% (i.e., there is no contribution of the network to the QoE degradation). A distinction may be further made, whether the network-induced contribution is above 50% of the total contribution to the determined QoE degradation, or equal to or less than 50%. The network-induced contribution may, however, be the largest contribution, even if its contribution is less than 50% (e.g., among a contribution if network, content, or another cause).

In an implementation form of the first aspect, the device is further configured to: obtain the content metrics by measuring the content of the web applications.

In particular, a change of the content of the one or more web applications (over time) may be obtained by the device. The device may perform active measurements to obtain the one or more content metrics, for instance, from one or more web pages of the web applications.

In an implementation form of the first aspect, the device is further configured to: obtain the user metrics by monitoring network traffic.

In particular, a change of the one or more user metrics (over time) may be obtained by the device, for instance, may be collected by the device. The device may perform passive measurements to obtain these user metrics, for instance, from encrypted or unencrypted web traffic.

In an implementation form of the first aspect, the device is further configured to, if the contribution information is indicative of the network-induced contribution being the largest contribution to the determined QoE degradation: obtain one or more network metrics, the network metrics being related to a performance of the network; and determine whether a change of at least one of the network metrics corresponds to the QoE degradation.

In particular, a change of the one or more network metrics (over time) may be obtained by the device, for instance, may be collected by the device. The device may perform passive and/or active measurements to obtain these network metrics, for instance, from other network elements.

In an implementation form of the first aspect, the device is further configured to: report the at least one of the network metrics corresponding to the QoE degradation; and/or rank the at least one of the network metrics corresponding to the QoE degradation according to a predefined criterion.

In an implementation form of the first aspect, the device is further configured to: report an unidentified network issue, if there is no change of at least one of the network metrics corresponding to the QoE degradation.

In an implementation form of the first aspect, the device is further configured to: estimate a value of the network-induced contribution to the QoE degradation; and/or estimate a value of a content-induced contribution to the QoE degradation, wherein the content-induced contribution is caused by a content change of the content of the web applications.

In an implementation form of the first aspect, the device is further configured to: obtain one or more raw user metrics and/or one or more raw content metrics; and obtain the user metrics and/or the content metrics by performing a change point detection (CPD) algorithm and/or an outlier detection (OD) algorithm on, respectively, the raw user metrics and/or the raw content metrics.

A raw user metric may be a time series of measurements of a user metric over one user or over a pool of users of the one or more web applications. A raw content metric may be a time series of measurements of a content metric over one machine or over a pool of machines. One or more processing operations may be carried out on the respective raw metric to obtain the corresponding metric, for instance, processing operations comprising CPD and OD operations.

In an implementation form of the first aspect, the user metrics comprise at least one of: one or more QoS parameters related to the QoE of the users; one or more QoE indicators indicative of the QoE of the users; one or more key quality indicators related to the QoE of the users.

The QoS parameters may be related to one or more web applications.

In an implementation form of the first aspect, the user metrics comprise at least one of: a page loading time of one or more web pages related to the web applications; a speed index of one or more web pages related to the web applications; a byte index of one or more web pages related to the web applications.

In an implementation form of the first aspect, the content metrics comprise at least one of:
a number of objects of one or more web pages related to the web applications; a page weight of one or more web pages related to the web applications.

A second aspect of the disclosure provides a method for detecting a network-induced contribution to a QoE degradation for one or more web applications, as defined by the appended independent claim 13.

A third aspect of the disclosure, as defined by the appended independent claim 14, provides a computer program comprising a program code for performing the method according to the second aspect when executed on a computer

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows a device according to an embodiment of the invention.
- FIG. 2: shows a device according to an embodiment of the invention.
- FIG. 3: shows schematically a method carried out by a device according to an embodiment of the invention.
- FIG. 4: shows schematically a method carried out by a device according to an embodiment of the invention.
- FIG. 5: shows a method according to an embodiment of the invention.

### DETAILED DESCRIPTION OF EMBODIMENTS

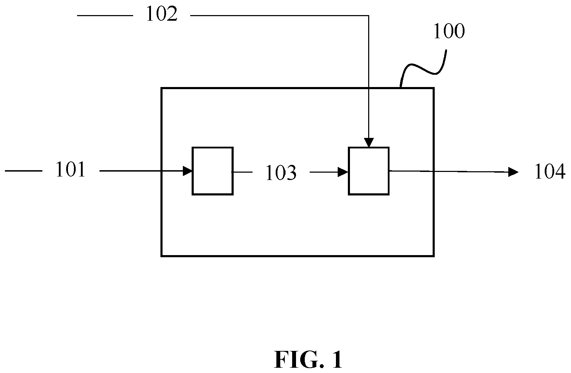

FIG. 1 shows a device 100 according to an embodiment of the invention. The device 100 is configured to detect QoE degradation(s) of one or more users of one or more web applications. In particular, the device 100 is configured to detect a network-induced contribution to the detected QoE degradation(s), i.e., to determine, to which extent the network (particularly a network issue) is responsible for the QoE degradation(s). The device may be any computer or processing device, which is configured to perform the steps described in the following.

The device 100 is configured to obtain one or more user metrics 101, wherein the one or more user metrics 101 are indicative of a QoE of one or more users of the one or more web applications. The device 100 is not limited by how it obtains these user metrics 101. For instance, the device 100 may monitor network traffic (particularly web traffic related to the one or more web applications), in order to obtain the one or more user metrics 101. The network traffic may be encrypted or non-encrypted. The device 100 may collect the user metrics 101 from the network traffic.

Further, the device 100 is configured to obtain one or more content metrics 102, wherein the one or more content metrics 102 are indicative of a content of the one or more web applications. The device 100 is not limited by how it obtains these content metrics 102. For instance, the device 100 may measure the content of the one or more web applications, in order to obtain the one or more content metrics 102. For instance, the device 100 may measure a number of objects of one or more web pages related to the one or more web applications, and/or a page weight of one or more web pages related to the one or more web applications, in order to obtain the one or more content metrics 101. Thereby, the one or more content metrics 102 may comprise the number of objects and/or may comprise the page weight.

Further the device 100 is configured to determine a QoE degradation 103 of the QoE of the one or more users, based on the one or more user metrics 101. For instance, the device 100 may detect a change in the one or more user metrics 101, and may determine that the change is associated with, or indicates, a degradation of the QoE of the users associated with the one or more user metrics 101. The QoE degradation 103 of the one or more users may be temporally correlated with the change (e.g., a degradation) of the one or more user metrics 101.

The device 100 is then configured to determine a contribution information 104, which is indicative of a network-induced contribution to the determined QoE degradation 103. The device 100 is configured to determine the contribution information 104 based on the one or more content metrics 102. The contribution information 104 may be indicative of one of: the network-induced contribution is the largest contribution to the determined QoE degradation 103, e.g., it contributes by more than 50%; the network-induced contribution is not the largest contribution to the determined QoE degradation 103, e.g., it contributes by less than 50%; the network-induced contribution is the only contribution to the determined QoE degradation 103, i.e., it contributes completely by 100%; or the network-induced contribution to the determined QoE degradation 103 is zero, i.e., it contributes 0%.

The device 100 may comprise a processor or processing circuitry (not shown) configured to perform, conduct or initiate the various operations of the device 100 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multipurpose processors.

The device 100 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the device 100 to be performed.

In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

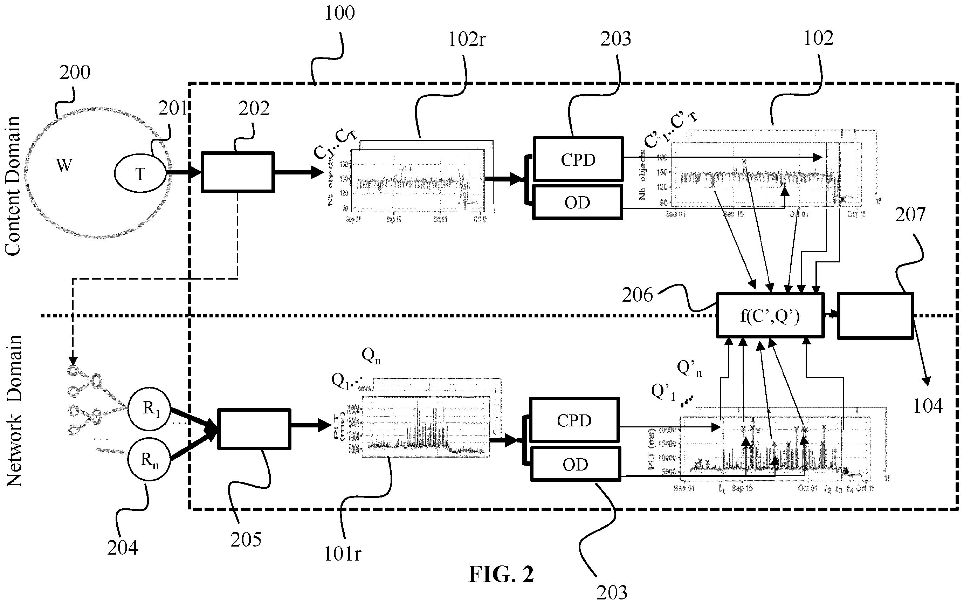

According to the above description, the device 100, according to embodiments of the invention, may identify a QoE degradation 103 of one or more users to be specifically caused by a network issue (i.e., identify that it is network-induced), either partly or completely. For instance, the device 100 may use active web measurements to disentangle apparent issues, which are due to changes in the content. A possible device 100 synoptic will be described in the following with respect to FIG. 2.

FIG. 2 shows a device 100 according to an embodiment of the invention, which builds on the embodiment shown in FIG. 1. Same elements in FIG. 1 and FIG. 2 are labelled with the same reference signs and may be implemented likewise. FIG. 2 shows, in particular, a possible synoptic of the device 100.

The device 100 may obtain input as follows:
- The device 100 obtains the one or more content metrics 102. For instance, the device 100 may comprise one or more active content monitor (AM) components 202 (shown to be in a "content domain" above the horizontal dotted line), which may perform an automated and/or periodic monitoring of the content of the one or more web applications. For example, the device 100 may monitor a target set 201 of web pages of interest (e.g., a set T of web pages among all web pages W of the one or more web applications; e.g., the set T may comprise the top N (e.g. N=1000) web pages that are frequently contacted).
   ▪ The device 100 may, in particular, extract one or more raw content metrics 102r from the web pages of interest, wherein these web pages may yield a stable and steady stream of metric data.
   ▪ The device 100 may perform a CPD and/or OD algorithm method 203 on the one or more raw content metrics 102r, which may be preliminary used to reduce the metric data that later needs to be exported and combined. The CPD and/or OD method 203 may transform the raw one or more content metrics 102r (e.g., the content series C in FIG. 2) into the one or more content metrics 102 (e.g., into the reduced series C' in FIG. 2).
- The device 100 further obtains the one or more user metrics 101. For instance, the device 100 may comprise one or more passive network monitor (PM) components 205 (shown to be in a "network domain" below the dotted line"), which may be deployed in the network and may comprise measuring applications for measuring QoS and/or QoE and/or KQI indicators for web application sessions of the users. For example, the device 100 may receive the one or more user metrics 101 based on monitoring network traffic, particularly web traffic of the web applications, at one or more routers 204 of the network. The routers 204 may be associated with the one or more users of the one or more web applications.
   ▪ The device 100 may thereby use, as the PM components 205, existing and deployed entities or systems, which are configured to extract network and application metrics (wherein content properties are not available at the network level).
   ▪ The device 100 may, in particular, extract one or more raw user metrics 101r related to the one or more users.
   ▪ The device 100 may perform a CPD and/or OD method 203 on the one or more raw user metrics 101r, which can be used to reduce the metric data that later needs to be exported and combined. The CPD and/or OD method 203 may transform the one or more raw user metrics 101r (e.g., the quality series Q in FIG. 2) into the one or more user metrics 101 (e.g., into the reduced series Q' in FIG. 2).

The device 100 may further process the input as follows:
- The device 100 may be configured to collect, and process and/or combine the obtained raw user metrics 101r and raw content metrics 102r (e.g., the time series C and Q in FIG. 2), or the already converted user metrics 101 and content metrics 102 (e.g., the time series C', Q' in FIG. 2). For instance, the device 100 may be configured to apply a combinative function f(C',Q'), as indicated in the block 206 in FIG. 2, on these metrics.
- The device 100 may then be configured to perform a method 207 to process changes of the content metrics 102 and the user metrics 101, respectively, to filter determined QoE degradations 103. Thereby, the determined QoE degradations 103 are determined based on the one or more user metrics 101. In particular, the device 100 is configured to determine the contribution information 104, which indicates a network-induced contribution to each determined QoE degradation 103. Based thereon, the device may be further configured to filter the determined QoE degradations 103, for example, for a subset of QoE degradations 103 caused by the network only (e. g., for reducing false positive detection). Further, the device 100 may explain their relative importance as follows.
   ▪ The device 100 may extract the most probable "cause" of any determined QoE degradation 103 among all possible contributions including {content, network, unknown}, and the device 100 may possibly rank and measure their relative proportions.
   ▪ Given a "cause" between the possible contributions including {content, network, unknown} of a determined QoE degradation 103, the device 100 may provide further extraction of the actual component or indicator, which has induced the change on the one or more user metrics 101, in terms of the most probable cause, ranking, and/or relative proportion.

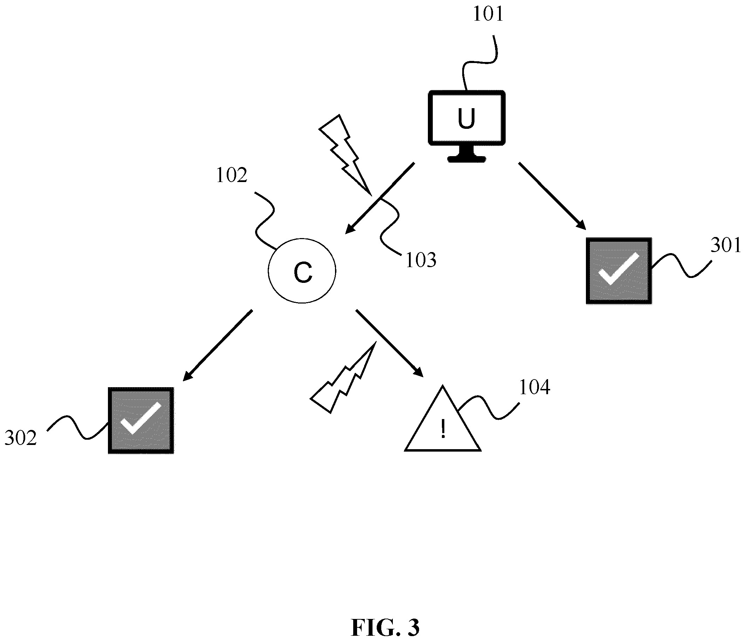

FIG. 3 shows schematically a method carried out by a device 100 according to an embodiment of the invention. The device 100 may be as shown in FIG. 1 or FIG. 2. Same elements in FIG. 3 and FIG. 1 and FIG. 2 are labelled with the same reference signs and may be implemented likewise.

The method performed by the device 100 may extract the most probable "cause" of a QoE degradation 103 among the possible contributions including {content, network, unknown}. The method may comprise comparing one or more time series of user events with content events, as reflected in the one or more user metrics 101 and the one or more content metrics 102, respectively. An underlying idea of the method performed by the device 100 is explained with respect to FIG. 3 in a simple high-level heuristic following a tree model for simplicity, wherein binary logic may construct a full truth table.

The device 100 may be configured to track QoE metrics (i.e., a user metric 101) of a user or a pool of users of a web application. The user metric 101 may, for example, comprise a PLT, and is represented by "U" in FIG. 3.

The device 100 may determine a QoE degradation 103 based on the user metric 101. When a QoE degradation 103 is not observed, the device 100 may determine that there is no QoE issue, and may provide an according output 301. When the device 100 determines a QoE degradation 103 for this user or pool of users, the device 100 may continue by checking the content of the web application.

In particular, the device 100 may track a content metric 102, for example, the number of objects of a web page of the web application, represented by "C" in FIG. 3. When the device 100 determines, based on the content metric 102, that a change of the content corresponds to - for instance, is concomitant - with the QoE degradation 103 determined based on the user metric 102, the device 100 may determine that there is no QoE issue, and that instead the QoE degradation is due to a content change of the web application. The device 100 may provide an according output 302. When the device 100 determines that a change of the content is not observed concomitantly, the device may raise a network issue alarm. Further, the device 100 may provide the contribution information 104, which is indicative of the network-induced contribution to the determined QoE degradation 103.

The QoE degradation 103 may correspond to a specific instant given by an algorithm, typically a CPD algorithm, over a univariate or multivariate time series. The term "concomitant" may correspond to either occurring around the same time (with around defined by a certain margin of error in time the device 100 allows), or a more complex algorithm for detecting concomitance.

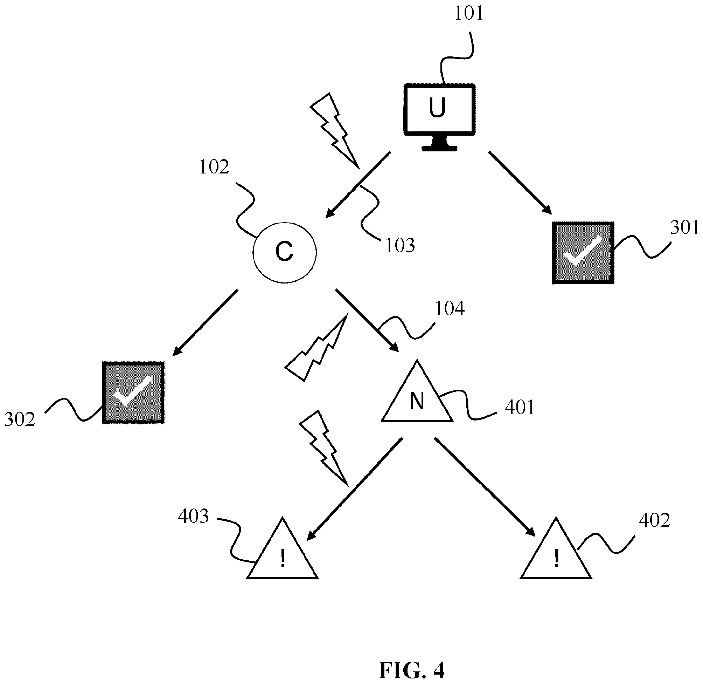

FIG. 4 shows schematically a method carried out by a device 100 according to an embodiment of the invention, which builds on FIG. 3. The device 100 may be as shown in FIG. 1 or FIG. 2. Same elements in FIG. 3 and FIG. 4 are labelled with the same reference signs and may be implemented likewise.

FIG. 4 particularly shows that the device 100 can further refine the identification of the network issue, for instance, by tracking down network QoS metrics over the network. When the device 100 raises a network issue, the device 100 may be further configured to check a network metric 401 (represented by "N" in FIG. 4) tracked over the network. For instance, if the contribution information 104 is indicative of the network-induced contribution being the largest contribution to the determined QoE degradation 103, the device 100 may obtain the network metric 401, wherein the network metric 401 is related to a performance of the network. Further, the device 100 may determine whether a change of the network metric 401 corresponds to the QoE degradation 103. If a change of the network metric 401 corresponds to the QoE degradation 103 - for instance they are concomitant - the device 100 may provide an output 403 indicating the problematic network metric 401. The device 100 may in this way also check multiple network metrics 410, and may rank problematic network metrics 401 by importance. Otherwise, the device 100 may provide an output 402 indicating an unidentified network issue.

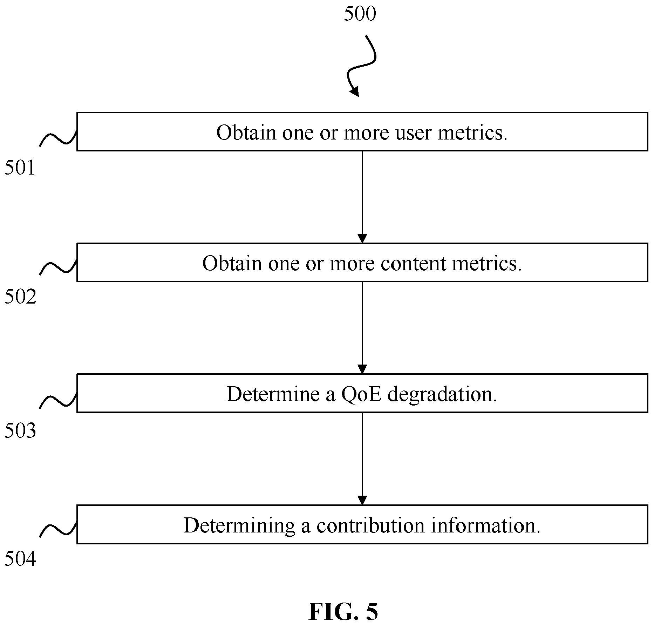

FIG. 5 shows a method 500 according to an embodiment of the invention. The method 500 may be performed by the device 100 and is for detecting a network-induced contribution to a QoE, degradation for one or more web applications. The method 500 comprises a step 501 of obtaining one or more user metrics 101, the user metrics 101 being indicative of a QoE of one or more users of the web applications. The method 500 further comprises a step 502 of obtaining one or more content metrics 102, the content metrics 102 being indicative of a content of the web applications. The method 500 further comprises a step 503 of determining a QoE degradation of the QoE of the users based on the one or more user metrics 101. Finally, the method 500 comprises a step 504 of determining a contribution information indicative of a network-induced contribution to the determined QoE degradation 103 based on the content metrics 103.

The embodiments of the invention presented in this disclosure provide several advantage, for instance:
- Integration of user metrics 101 apart from network metrics for evaluating QoE degradation 103. In most conventional solutions, the QoE degradation is identified only under the perspective of network degradation, which is not sufficient for full evaluation user QoE degradation.
- Integration of content metrics 102 for evaluating QoE degradation 103. In most conventional solutions, network and user-based metrics are exclusively used to evaluate QoE degradation even for web pages with changing content, which is insufficient to ascertain that user QoE degradation is tied to network degradation.
- Focus on QoE degradation rooted by network sources, for which ISPs are interested, which reduces two types of false alarms: a. QoE degradation caused by content change; b. network degradation which does not impact QoE.
- Reduction of false alarm compared to network only solutions, and compared to user only solutions.

## Claims

1. A device (100) for detecting a network-induced contribution to a quality of experience, QoE, degradation for one or more web applications, the device (100) being configured to:
obtain one or more user metrics (101), the user metrics (101) being indicative of a QoE of one or more users of the web applications;
obtain one or more content metrics (102), the content metrics (102) being indicative of a content of the web applications;
determine a QoE degradation (103) of the QoE of the users based on the one or more user metrics (101); and
determine a contribution information (104) indicative of a network-induced contribution to the determined QoE degradation (103) based on the content metrics (102);
wherein the device (100) is further configured to:
determine whether the QoE degradation (103) corresponds to a change of the content metrics (102); and
determine the contribution information (104), wherein the contribution information (104) is indicative of the network-induced contribution being the largest contribution to the determined QoE degradation (103), if the QoE degradation (103) does not correspond to a change of the content metrics (102), or
determine the contribution information (104), wherein the contribution information (104) is indicative of the network-induced contribution being not the largest contribution to the determined QoE degradation (103), if the QoE degradation (103) corresponds to a change of the content metrics (102).

2. The device (100) according to claim 1, wherein the contribution information (104) is indicative of one of:
the network-induced contribution is the largest contribution to the determined QoE degradation (103);
the network-induced contribution is not the largest contribution to the determined QoE degradation (103);
the network-induced contribution is the only contribution to the determined QoE degradation (103);
the network-induced contribution to the determined QoE degradation (103) is zero.

3. The device (100) according to one of the claims 1 to 2, further configured to:
obtain the content metrics (102) by measuring the content of the web applications.

4. The device (100) according to one of the claims 1 to 3, further configured to:
obtain the user metrics (101) by monitoring network traffic.

5. The device (100) according to one of the claims 1 to 4, further configured to, if the contribution information (104) is indicative of the network-induced contribution being the largest contribution to the determined QoE degradation (103):
obtain one or more network metrics (401), the network metrics (401) being related to a performance of the network; and
determine whether a change of at least one of the network metrics (401) corresponds to the QoE degradation (103).

6. The device according to claim 5, further configured to:
report the at least one of the network metrics (401) corresponding to the QoE degradation (103); and/or
rank the at least one of the network metrics (401) corresponding to the QoE degradation (103) according to a predefined criterion.

7. The device (100) according to claim 5 or 6, further configured to:
report an unidentified network issue (402), if there is no change of at least one of the network metrics (401) corresponding to the QoE degradation (103).

8. The device (100) according to one of the claims 1 to 7, further configured to:
estimate a value of the network-induced contribution to the QoE degradation (103); and/or
estimate a value of a content-induced contribution to the QoE degradation (103), wherein the content-induced contribution is caused by a content change of the content of the web applications.

9. The device (100) according to one of the claims 1 to 8, further configured to:
obtain one or more raw user metrics (101r) and/or one or more raw content metrics (102r); and
obtain the user metrics (101) and/or the content metrics (102) by performing a change point detection algorithm and/or an outlier detection algorithm (203) on, respectively, the raw user metrics (101r) and/or the raw content metrics (102r).

10. The device (100) according to one of the claims 1 to 9, wherein the user metrics (101) comprise at least one of:
one or more quality of service parameters related to the QoE of the users;
one or more QoE indicators indicative of the QoE of the users;
one or more key quality indicators related to the QoE of the users.

11. The device (100) according to one of the claims 1 to 10, wherein the user metrics (101) comprise at least one of:
a page loading time of one or more web pages (201) related to the web applications;
a speed index of one or more web pages (201) related to the web applications;
a byte index of one or more web pages (201) related to the web applications.

12. The device (100) according to one of the claims 1 to 11, wherein the content metrics (102) comprise at least one of:
a number of objects of one or more web pages (201) related to the web applications;
a page weight of one or more web pages (201) related to the web applications.

13. A method (500) for detecting a network-induced contribution to a quality of experience, QoE, degradation for one or more web applications, the method (500) comprising:
obtaining (501) one or more user metrics (101), the user metrics (101) being indicative of a QoE of one or more users of the web applications;
obtaining (502) one or more content metrics (102), the content metrics (102) being indicative of a content of the web applications;
determining (503) a QoE degradation (103) of the QoE of the users based on the one or more user metrics (101); and
determining (504) a contribution information (104) indicative of a network-induced contribution to the determined QoE degradation (103) based on the content metrics (102),
wherein the method (500) further comprises:
determining whether the QoE degradation (103) corresponds to a change of the content metrics (102); and
determining the contribution information (104), wherein the contribution information (104) is indicative of the network-induced contribution being the largest contribution to the determined QoE degradation (103), if the QoE degradation (103) does not correspond to a change of the content metrics (102), or
determining the contribution information (104), wherein the contribution information (104) is indicative of the network-induced contribution being not the largest contribution to the determined QoE degradation (103), if the QoE degradation (103) corresponds to a change of the content metrics (102).

14. A computer program comprising a program code for performing the method (500) according to claim 13, when executed on a computer.

## Patentansprüche

1. Gerät (100) zum Detektieren eines netzwerkinduzierten Beitrags zu einer Verschlechterung einer Erlebnisqualität, QoE, für eine oder mehrere Webanwendungen, wobei das Gerät (100) konfiguriert ist zum:
Erlangen einer oder mehrerer Benutzermetriken (101), wobei die Benutzermetriken (101) eine QoE einer oder mehrerer Benutzer der Webanwendungen angeben;
Erlangen einer oder mehrerer Inhaltsmetriken (102), wobei die Inhaltsmetriken (102) einen Inhalt der Webanwendungen angeben;
Bestimmen einer QoE-Verschlechterung (103) der QoE der Benutzer basierend auf der einen oder den mehreren Benutzermetriken (101); und
Bestimmen einer Beitragsinformation (104), die einen netzwerkinduzierten Beitrag zu der bestimmten QoE-Verschlechterung (103) angibt, basierend auf den Inhaltsmetriken (102);
wobei das Gerät (100) ferner konfiguriert ist zum:
Bestimmen, ob die QoE-Verschlechterung (103) mit einer Änderung der Inhaltsmetriken (102) korrespondiert; und
Bestimmen der Beitragsinformation (104), wobei die Beitragsinformation (104) angibt, dass der netzwerkinduzierte Beitrag der größte Beitrag zu der bestimmten QoE-Verschlechterung (103) ist, wenn die QoE-Verschlechterung (103) nicht mit einer Änderung der Inhaltsmetriken (102) korrespondiert, oder
Bestimmen der Beitragsinformation (104), wobei die Beitragsinformation (104) angibt, dass der netzwerkinduzierte Beitrag nicht der größte Beitrag zu der bestimmten QoE-Verschlechterung (103) ist, wenn die QoE-Verschlechterung (103) mit einer Änderung der Inhaltsmetriken (102) korrespondiert.

2. Gerät (100) nach Anspruch 1, wobei die Beitragsinformation (104) eines von Folgendem angibt:
der netzwerkinduzierte Beitrag ist der größte Beitrag zu der bestimmten QoE-Verschlechterung (103);
der netzwerkinduzierte Beitrag ist nicht der größte Beitrag zu der bestimmten QoE-Verschlechterung (103);
der netzwerkinduzierte Beitrag ist der einzige Beitrag zu der bestimmten QoE-Verschlechterung (103);
der netzwerkinduzierte Beitrag zu der bestimmten QoE-Verschlechterung (103) ist null.

3. Gerät (100) nach einem der Ansprüche 1 bis 2, ferner konfiguriert zum:
Erlangen der Inhaltsmetriken (102) durch Messen des Inhalts der Webanwendungen.

4. Gerät (100) nach einem der Ansprüche 1 bis 3, ferner konfiguriert zum:
Erlangen der Benutzermetriken (101) durch Überwachen von Netzwerkverkehr.

5. Gerät (100) nach einem der Ansprüche 1 bis 4, ferner konfiguriert zum, wenn die Beitragsinformation (104) angibt, dass der netzwerkinduzierte Beitrag der größte Beitrag zu der bestimmten QoE-Verschlechterung (103) ist:
Erlangen einer oder mehrerer Netzwerkmetriken (401), wobei die Netzwerkmetriken (401) zu einer Leistung des Netzwerks in Beziehung stehen; und
Bestimmen, ob eine Änderung mindestens einer der Netzwerkmetriken (401) mit der QoE-Verschlechterung (103) korrespondiert.

6. Gerät nach Anspruch 5, ferner konfiguriert zum:
Berichten der mindestens einen der Netzwerkmetriken (401) korrespondierend mit der QoE-Verschlechterung (103); und/oder
rangmäßiges Einordnen der mindestens einen der Netzwerkmetriken (401) korrespondierend mit der QoE-Verschlechterung (103) gemäß einem im Voraus definierten Kriterium.

7. Gerät (100) nach Anspruch 5 oder 6, ferner konfiguriert zum:
Berichten eines nicht identifizierten Netzwerkproblems (402), wenn keine Änderung mindestens einer der Netzwerkmetriken (401) korrespondierend mit der QoE-Verschlechterung (103) vorhanden ist.

8. Gerät (100) nach einem der Ansprüche 1 bis 7, ferner konfiguriert zum:
Schätzen eines Werts des netzwerkinduzierten Beitrags zu der QoE-Verschlechterung (103); und/oder
Schätzen eines Werts eines inhaltsinduzierten Beitrags zu der QoE-Verschlechterung (103), wobei der inhaltsinduzierte Beitrag durch eine Inhaltsänderung des Inhalts der Webanwendungen verursacht wird.

9. Gerät (100) nach einem der Ansprüche 1 bis 8, ferner konfiguriert zum:
Erlangen einer oder mehrerer Roh-Benutzermetriken (101r) und/oder einer oder mehrerer Roh-Inhaltsmetriken (102r); und
Erlangen der Benutzermetriken (101) und/oder der Inhaltsmetriken (102) durch Durchführen eines Änderungspunkt-Detektionsalgorithmus und/oder eines Ausreißer-Detektionsalgorithmus (203) an jeweils den Roh-Benutzermetriken (101r) und/oder den Roh-Inhaltsmetriken (102r).

10. Gerät (100) nach einem der Ansprüche 1 bis 9, wobei die Benutzermetriken (101) mindestens eines von Folgendem umfassen:
einen oder mehrere Dienstgüte-Parameter, die zu der QoE der Benutzer in Beziehung stehen;
einen oder mehrere QoE-Indikatoren, die die QoE der Benutzer angeben;
einen oder mehrere Schlüssel-Qualitätsindikatoren, die zu der QoE der Benutzer in Beziehung stehen.

11. Gerät (100) nach einem der Ansprüche 1 bis 10, wobei die Benutzermetriken (101) mindestens eines von Folgendem umfassen:
eine Seitenladezeit einer oder mehrerer Webseiten (201), die zu den Webanwendungen in Beziehung stehen;
einen Geschwindigkeitsindex einer oder mehrerer Webseiten (201), die zu den Webanwendungen in Beziehung stehen;
einen Byte-Index einer oder mehrerer Webseiten (201), die zu den Webanwendungen in Beziehung stehen.

12. Gerät (100) nach einem der Ansprüche 1 bis 11, wobei die Inhaltsmetriken (102) mindestens eines von Folgendem umfassen:
eine Anzahl von Objekten einer oder mehrerer Webseiten (201), die zu den Webanwendungen in Beziehung stehen;
ein Seitengewicht einer oder mehrerer Webseiten (201), die zu den Webanwendungen. in Beziehung stehen.

13. Verfahren (500) zum Detektieren eines netzwerkinduzierten Beitrags zu einer Verschlechterung einer Erlebnisqualität, QoE, für eine oder mehrere Webanwendungen, das Verfahren (500) umfassend:
Erlangen (501) einer oder mehrerer Benutzermetriken (101), wobei die Benutzermetriken (101) eine QoE einer oder mehrerer Benutzer der Webanwendungen angeben;
Erlangen (502) einer oder mehrerer Inhaltsmetriken (102), wobei die Inhaltsmetriken (102) einen Inhalt der Webanwendungen angeben;
Bestimmen (503) einer QoE-Verschlechterung (103) der QoE der Benutzer basierend auf der einen oder den mehreren Benutzermetriken (101); und
Bestimmen (504) einer Beitragsinformation (104), die einen netzwerkinduzierten Beitrag zu der bestimmten QoE-Verschlechterung (103) angibt, basierend auf den Inhaltsmetriken (102),
wobei das Verfahren (500) ferner umfasst:
Bestimmen, ob die QoE-Verschlechterung (103) mit einer Änderung der Inhaltsmetriken (102) korrespondiert; und
Bestimmen der Beitragsinformation (104), wobei die Beitragsinformation (104) angibt, dass der netzwerkinduzierte Beitrag der größte Beitrag zu der bestimmten QoE-Verschlechterung (103) ist, wenn die QoE-Verschlechterung (103) nicht mit einer Änderung der Inhaltsmetriken (102) korrespondiert, oder
Bestimmen der Beitragsinformation (104), wobei die Beitragsinformation (104) angibt, dass der netzwerkinduzierte Beitrag nicht der größte Beitrag zu der bestimmten QoE-Verschlechterung (103) ist, wenn die QoE-Verschlechterung (103) mit einer Änderung der Inhaltsmetriken (102) korrespondiert.

14. Computerprogramm, umfassend einen Programmcode zum Durchführen des Verfahrens (500) nach Anspruch 13, wenn er auf einem Computer ausgeführt wird.

## Revendications

1. Dispositif (100) pour détecter une contribution induite par réseau à une dégradation de qualité d'expérience, QoE, pour une ou plusieurs applications web, le dispositif (100) étant configuré pour :
obtenir une ou plusieurs métriques d'utilisateur (101), les métriques d'utilisateur (101) indiquant une QoE d'un ou plusieurs utilisateurs des applications web ;
obtenir une ou plusieurs métriques de contenu (102), les métriques de contenu (102) indiquant un contenu des applications web ;
déterminer une dégradation de QoE (103) de la QoE des utilisateurs sur la base des une ou plusieurs métriques d'utilisateur (101) ; et
déterminer une information de contribution (104) indiquant une contribution induite par réseau à la dégradation de QoE (103) déterminée sur la base des métriques de contenu (102) ;
le dispositif (100) étant également configuré pour :
déterminer si la dégradation de QoE (103) correspond à une variation des métriques de contenu (102) ; et
déterminer l'information de contribution (104), l'information de contribution (104) indiquant que la contribution induite par réseau est la plus grande contribution à la dégradation de QoE (103) déterminée, si la dégradation de QoE (103) ne correspond pas à une variation des métriques de contenu (102), ou
déterminer l'information de contribution (104), l'information de contribution (104) indiquant que la contribution induite par réseau n'est pas la plus grande contribution à la dégradation de QoE (103) déterminée, si la dégradation de QoE (103) correspond à une variation des métriques de contenu (102).

2. Dispositif (100) selon la revendication 1, dans lequel l'information de contribution (104) indique une des situations suivantes :
la contribution induite par réseau est la plus grande contribution à la dégradation de QoE (103) déterminée ;
la contribution induite par réseau n'est pas la plus grande contribution à la dégradation de QoE (103) déterminée ;
la contribution induite par réseau est la seule contribution à la dégradation de QoE (103) déterminée ;
la contribution induite par réseau à la dégradation de QoE (103) déterminée est nulle.

3. Dispositif (100) selon une des revendications 1 et 2, également configuré pour :
obtenir les métriques de contenu (102) en mesurant le contenu des applications web.

4. Dispositif (100) selon une des revendications 1 à 3, également configuré pour :
obtenir les métriques d'utilisateur (101) en surveillant le trafic réseau.

5. Dispositif (100) selon une des revendications 1 à 4, également configuré pour, si l'information de contribution (104) indique que la contribution induite par réseau est la plus grande contribution à la dégradation de QoE (103) déterminée :
obtenir une ou plusieurs métriques de réseau (401), les métriques de réseau (401) étant liées à une performance du réseau ; et
déterminer si une variation d'au moins une des métriques de réseau (401) correspond à la dégradation de QoE (103).

6. Dispositif (100) selon la revendication 5, également configuré pour :
rapporter l'au moins une des métriques de réseau (401) correspondant à la dégradation de QoE (103) ; et/ou
classer l'au moins une des métriques de réseau (401) correspondant à la dégradation de QoE (103) selon un critère prédéfini.

7. Dispositif (100) selon la revendication 5 ou 6, également configuré pour :
rapporter un problème réseau non identifié (402), s'il n'y a pas de variation d'au moins une des métriques de réseau (401) correspondant à la dégradation de QoE (103).

8. Dispositif (100) selon une des revendications 1 à 7, également configuré pour :
estimer une valeur de la contribution induite par réseau à la dégradation de QoE (103) ; et/ou
estimer une valeur d'une contribution induite par contenu à la dégradation de QoE (103), la contribution induite par contenu étant due à une variation de contenu du contenu des applications web.

9. Dispositif (100) selon une des revendications 1 à 8, également configuré pour :
obtenir une ou plusieurs métriques d'utilisateur brutes (lOIr) et une ou plusieurs métriques de contenu brutes (102r) ; et
obtenir les métriques d'utilisateur (101) et/ou les métriques de contenu (102) en appliquant un algorithme de détection de point de variation et/ou un algorithme de détection de valeurs aberrantes (203), respectivement, aux métriques d'utilisateur brutes (lOIr) et aux métriques de contenu brutes (102r).

10. Dispositif (100) selon une des revendications 1 à 9, dans lequel les métriques d'utilisateur (101) comprennent au moins un des éléments suivants :
un ou plusieurs paramètres de qualité de service liés à la QoE des utilisateurs ;
un ou plusieurs indicateurs de QoE indiquant la QoE des utilisateurs ;
un ou plusieurs indicateurs de qualité clés liés à la QoE des utilisateurs.

11. Dispositif (100) selon une des revendications 1 à 10, dans lequel les métriques d'utilisateur (101) comprennent au moins un des éléments suivants :
un temps de chargement de page d'une ou plusieurs pages web (201) liées aux applications web ;
un indice de rapidité d'une ou plusieurs pages web (201) liées aux applications web ;
un indice d'octets d'une ou plusieurs pages web (201) liées aux applications web.

12. Dispositif (100) selon une des revendications 1 à 11, dans lequel les métriques de contenu (102) comprennent au moins un des éléments suivants :
un nombre d'objets d'une ou plusieurs pages web (201) liées aux applications web ;
un poids de page d'une ou plusieurs pages web (201) liées aux applications web.

13. Procédé (500) pour détecter une contribution induite par réseau à une dégradation de qualité d'expérience, QoE, pour une ou plusieurs applications web, le procédé (500) comprenant les étapes consistant à :
obtenir (501) une ou plusieurs métriques d'utilisateur (101), les métriques d'utilisateur (101) indiquant une QoE d'un ou plusieurs utilisateurs des applications web ;
obtenir (502) une ou plusieurs métriques de contenu (102), les métriques de contenu (102) indiquant un contenu des applications web ;
déterminer (503) une dégradation de QoE (103) de la QoE des utilisateurs sur la base des une ou plusieurs métriques d'utilisateur (101) ; et
déterminer (504) une information de contribution (104) indiquant une contribution induite par réseau à la dégradation de QoE (103) déterminée sur la base des métriques de contenu (102),
le procédé (500) comprenant également les étapes consistant à ;
déterminer si la dégradation de QoE (103) correspond à une variation des métriques de contenu (102) ; et
déterminer l'information de contribution (104), l'information de contribution (104) indiquant que la contribution induite par réseau est la plus grande contribution à la dégradation de QoE (103) déterminée, si la dégradation de QoE (103) ne correspond pas à une variation des métriques de contenu (102), ou
déterminer l'information de contribution (104), l'information de contribution (104) indiquant que la contribution induite par réseau n'est pas la plus grande contribution à la dégradation de QoE (103) déterminée, si la dégradation de QoE (103) correspond à une variation des métriques de contenu (102).

14. Programme informatique comprenant un code de programme servant à effectuer le procédé (500) selon la revendication 13, lorsqu'il est exécuté sur un ordinateur.
